# EUROPEAN PATENT APPLICATION

(11) **EP 4 776 383 A1**
(43) Date of publication of application: **15.07.2026**
(21) Application number: 25861677.0
(22) Date of filing: 21.04.2025
(51) Int. Cl.: H01M 10/613, H01M 10/625, H01M 10/6554, H01M 10/6556, H01M 10/6568

(54) **LIQUID COOLING MODULE AND BATTERY PACK**

(30) Priority: 19.11.2024 CN 202422824737 U; 19.11.2024 CN 202411658167
(71) Applicant: Eve Energy Co., Ltd, Huizhou, Guangdong 516006 (CN)
(72) Inventor: HE, Yuqi, Huizhou, Guangdong 516006 (CN); DU, Zaigang, Huizhou, Guangdong 516006 (CN)
(74) Representative: Studio Torta S.p.A.
(86) International application number: PCT/CN2025/090045
(87) International publication number: WO 2026/108070

(57) **Abstract**

The present application provides a liquid cooling module and a battery pack. The liquid cooling module includes a second liquid cooling plate and a third liquid cooling plate. A flow channel is arranged in the second liquid cooling plate. The third liquid cooling plate arranged at an interval with the second liquid cooling plate. A first cooling portion is arranged in the third liquid cooling plate, and the first cooling portion is in communication with the flow channel to guide a cooling liquid into the first cooling portion and/or to guide the cooling liquid out of the first cooling portion, thereby simplifying a flow path of the cooling liquid and eliminating the need for bent or excessively long pipelines.

## Description

The present application claims the priority to Chinese Applications No. 202411658167.7, filed with CNIPA on November 19, 2024, and No. 202422824737.7, filed with CNIPA on November 19, 2024, the contents of which is incorporated herein by reference in their entirety.

### TECHNICAL FIELD

The present application relates to the field of battery technology, and in particular to a liquid cooling module and a battery pack.

### BACKGROUND

As an energy storage and power output device for electric vehicles, a power battery pack is a power source of the electric vehicles. In order to ensure the normal operation of the power battery pack, the battery module in the power battery pack needs to be equipped with a corresponding heat dissipation structure, such as a liquid cooling system, to dissipate the heat generated during the operation of the battery module as quickly as possible. At present, in the industry, the input and output of cooling liquid to and from liquid cooling plates in the liquid cooling system are completely achieved through pipelines. With an increase in the number of stacking layers of the battery pack, in the pipeline design for liquid cooling plates connected in parallel, it is difficult to consider space limitations, which leads to restrictions on the mounting of the liquid cooling plates.

### SUMMARY

In view of the complex spatial layout faced by the pipeline design for the liquid cooling system in related technologies, it is urgent to further optimize the liquid cooling module to meet the needs of large-capacity battery packs.

In a first aspect, embodiments of the present application provide a liquid cooling module, including:
a second liquid cooling plate, in which a flow channel is arranged; and
a third liquid cooling plate, arranged at an interval with the second liquid cooling plate, in which a first cooling portion is arranged in the third liquid cooling plate, and the first cooling portion is in communication with the flow channel to guide cooling liquid into the first cooling portion and/or to guide the cooling liquid out of the first cooling portion.

In a second aspect, embodiments of the present application provide a battery pack, including a battery module and a liquid cooling module. The liquid cooling plate includes:
a second liquid cooling plate, in which a flow channel is arranged; and
a third liquid cooling plate, arranged at an interval with the second liquid cooling plate, in which a first cooling portion is arranged in the third liquid cooling plate, and the first cooling portion is in communication with the flow channel to guide cooling liquid into the first cooling portion and/or to guide the cooling liquid out of the first cooling portion;
wherein the battery module is arranged between adjacent liquid cooling plates.

### BENEFICIAL EFFECTS

Embodiments of the present application provide a liquid cooling module and a battery pack. The liquid cooling module includes a second liquid cooling plate and a third liquid cooling plate. A flow channel is arranged in the second liquid cooling plate. The third liquid cooling plate is arranged at an interval with the second liquid cooling plate. A first cooling portion is arranged at the third liquid cooling plate. The first cooling portion is in communication with the flow channel to guide cooling liquid into the first cooling portion and/or to guide the cooling liquid out of the first cooling portion, so that the cooling liquid flows between the second liquid cooling plate and the third liquid cooling plate, simplifying a flow path of the cooling liquid, eliminating a need for bend or excessively long pipelines, and thereby increasing an space utilization inside the battery pack.

### BRIEF DESCRIPTION OF THE DRAWINGS

FIG. 1 is a schematic diagram of a structure of a battery pack provided in an embodiment of the present application;
FIG. 2 is a schematic diagram of a structure of a liquid cooling module provided in an embodiment of the present application;
FIG. 3 is a top view of a liquid cooling module provided in an embodiment of the present application;
FIG. 4 is a schematic top view of a second liquid cooling plate provided in an embodiment of the present application;
FIG. 5 is schematic a top view of a third liquid cooling plate provided in an embodiment of the present application;
FIG. 6 is a schematic diagram of one structure of a first joint provided in an embodiment of the present application;
FIG. 7 is a schematic diagram of another structure of the first joint provided in an embodiment of the present application;
FIG. 8 is a schematic diagram of a structure of a first connecting joint provided in an embodiment of the present application; and
FIG. 9 is a schematic diagram of a structure of a first liquid cooling plate provided in an embodiment of the present application.

Reference numerals in the accompany drawings:
1: battery pack; 11: battery module; 12: liquid cooling module; 13: groove; 15: end plate;
110: battery cell; 111: first battery module; 112: second battery module; 113: third battery module; 114: fourth battery module; 141: bottom plate; 151: vent;
121: first liquid cooling plate; 122: second liquid cooling plate; 123: third liquid cooling plate; 124: fourth liquid cooling plate; 125: first joint pipeline assembly; 126: second joint pipeline assembly; 127: quick-connect plug;
1211: first inlet; 1212: first outlet;
1220: flow channel; 1221: first sub-inlet; 1222: first sub-outlet; 1223: second sub-inlet; 1224: second sub-outlet; 1225: first through hole; 1226: second through hole; 1227: first liquid inlet flow channel; 1228: first liquid outlet flow channel; 1229: second cooling portion;
12291: second liquid inlet flow channel; 12292: second liquid outlet flow channel; 12293: first liquid cooling flow channel;
1230: first cooling portion; 1231: second inlet; 1232: second outlet; 1233: third liquid inlet flow channel; 1234: third liquid outlet flow channel; 1235 second liquid cooling flow channel;
1241: third inlet; 1242: third outlet; 1243: fourth liquid inlet flow channel; 1244: fourth liquid outlet flow channel; 1245: third liquid cooling flow channel;
1251: first joint; 1252: third joint; 1253: first connecting joint; 1254: first pipeline;
12541: first straight segment; 12542: second straight segment; 12543: third straight segment; 12544: first bending segment; 12545: second bending segment;
12510: liquid inlet joint; 12511: first opening; 12512: second opening; 12513: third opening;
12531: fourth opening; 12532: fifth opening;
1261: second joint; 1262: fourth joint; 1263: second connecting joint; 1264: second pipeline;
12610: liquid outlet joint.

### DETAILED DESCRIPTION

In the description of the present application, unless otherwise clearly specified and limited, the terms "connected to", "connected", and "fixed" should be understood in a broad sense, for example, it can be a fixed connection, a detachable connection, or an integral connection; it can be a mechanical connection or an electrical connection; it can be a direct connection or an indirect connection through an intermediate medium; and it can be an internal connection of two elements or an interaction relationship between two elements. For ordinary technicians in this field, the specific meanings of the above terms in the present application can be understood according to the specific circumstances.

In the present application, unless otherwise clearly specified and limited, a first feature being "on" or "under" a second feature may include the first and second features being in direct contact, or may include the first and second features being in contact not directly but through another feature between them. Moreover, a first feature being "on", "up of" and "above" a second feature includes the first feature being directly above and obliquely above the second feature, and the first feature having a higher horizontal height than the second feature. A first feature being "under", "down of" and "below" a second feature includes the first feature being directly below and obliquely below the second feature, and the first feature having a lower horizontal height than the second feature.

In the description of this embodiment, the terms "upper", "lower", "left", "right", "front", "rear" and other directions or positional relationships are based on the directions or positional relationships shown in the accompanying drawings, and are for the convenience of description and simplification of operation, rather than indicating or implying that the device or element referred to must have a specific direction, be constructed and operate in a specific direction, and therefore cannot be understood as limiting the present application. In addition, the terms "first" and "second" are used to distinguish in the description and have no special meaning.

The embodiments provide a liquid cooling module and a battery pack. The following are detailed descriptions of each. It should be noted that the description order of the following embodiments is not intended to limit the preferred order of the embodiments.

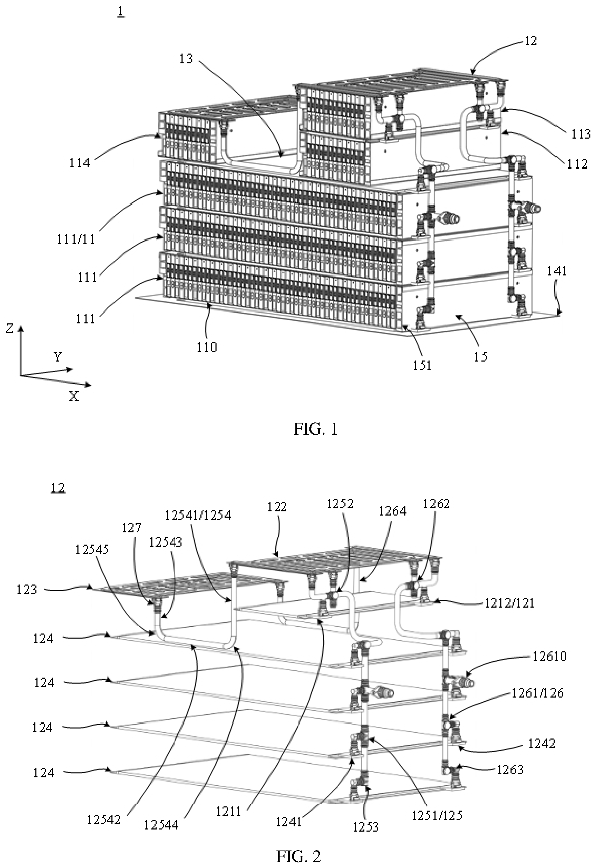

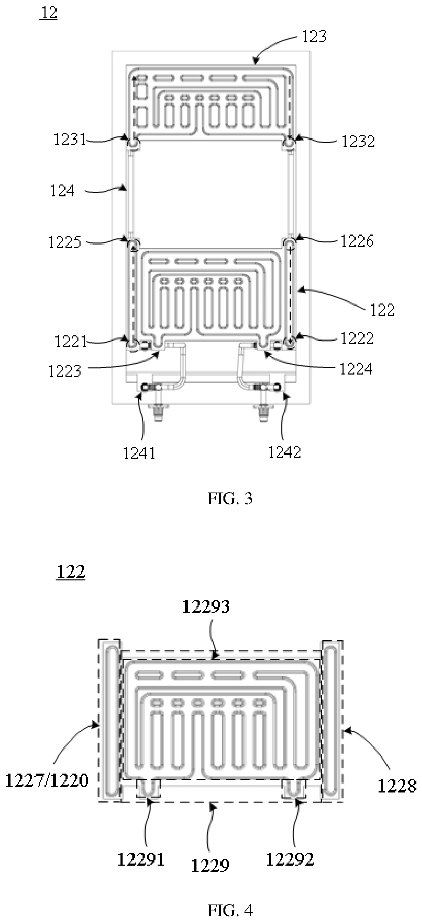

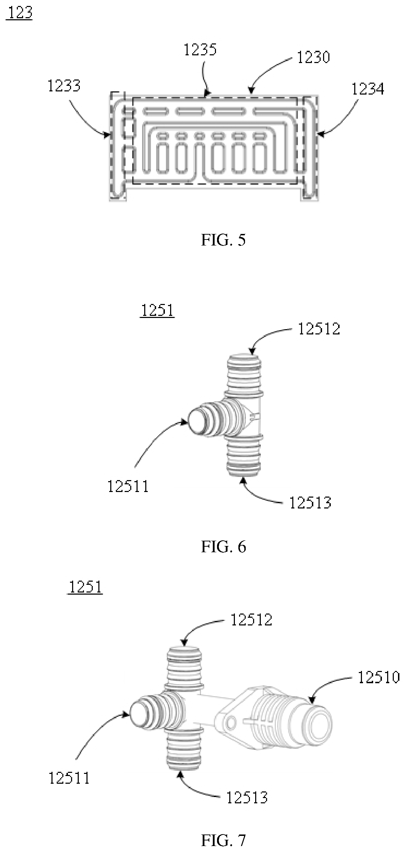

Please refer to FIG. 1, FIG. 2, FIG. 3, FIG. 4 and FIG. 5. FIG. 1 is a schematic diagram of a structure of a battery pack provided in an embodiment of the present application. FIG. 2 is a schematic diagram of a structure of a liquid cooling module provided in an embodiment of the present application. FIG. 3 is a top view of a liquid cooling module provided in an embodiment of the present application. FIG. 4 is a schematic top view of a second liquid cooling plate provided in an embodiment of the present application. FIG. 5 is a schematic top view of a third liquid cooling plate provided in an embodiment of the present application.

In an embodiment, the battery pack 1 includes a battery module 11 and a liquid cooling module 12. The liquid cooling module 12 includes multiple liquid cooling plates arranged in a stacked manner, and the battery module 11 is arranged between adjacent liquid cooling plates.

The liquid cooling module 12 includes a first liquid cooling plate 121, a second liquid cooling plate 122, and a third liquid cooling plate 123. The second liquid cooling plate 122 is arranged above the first liquid cooling plate 121. A flow channel 1220 is arranged in the second liquid cooling plate 122. The third liquid cooling plate 123 is arranged at an interval with the second liquid cooling plate 122. A first cooling portion 1230 is arranged at the third liquid cooling plate 123. The first cooling portion 1230 is in communication with the flow channel 1220 to guide cooling liquid into the first cooling portion 1230 and/or to guide the cooling liquid out of the first cooling portion 1230, so that the cooling liquid flows between the second liquid cooling plate 122 and the third liquid cooling plate 123, simplifying a flow path of the cooling liquid, eliminating a need for bend or excessively long pipelines, and thereby increasing a space utilization inside the battery pack 1.

Please continue to refer to FIG. 1 to FIG. 5. In an embodiment, a first liquid inlet flow channel 1227 and a first liquid outlet flow channel 1228 are arranged in the flow channel 1220. A second cooling portion 1229 located between the first liquid inlet flow channel 1227 and the first liquid outlet flow channel 1228 is further arranged in the second liquid cooling plate 122. The second liquid cooling plate 122 includes a first sub-inlet 1221, a first sub-outlet 1222, a second sub-inlet 1223, and a second sub-outlet 1224.

An end of the second cooling portion 1229 is connected to the second sub-inlet 1223, and another end of the second cooling portion 1229 is connected to the second sub-outlet 1224. An end of the first liquid inlet flow channel 1227 is connected to the first sub-inlet 1221, and another end of the first liquid inlet flow channel 1227 is connected to an end of the first cooling portion 1230. An end of the first liquid outlet flow channel 1228 is connected to the first sub-outlet 1222, and another end of the first liquid outlet flow channel 1228 is connected to another end of the first cooling portion 1230.

Specifically, the third liquid cooling plate 123 is arranged in a same layer and at an interval with the first liquid cooling plate 121 along a first direction Z. The third liquid cooling plate 123 includes a second inlet 1231 and a second outlet 1232. An end of the first liquid inlet flow channel 1227 is connected to the first sub-inlet 1221, and another end of the first liquid inlet flow channel 1227 is connected to the second inlet 1231. An end of the first liquid outlet flow channel 1228 is connected to the first sub-outlet 1222, and another end of the first liquid outlet flow channel 1228 is connected to the second outlet 1232. An end of the second cooling portion 1229 is connected to the second sub-inlet 1223, and another end of the second cooling portion 1229 is connected to the second sub-outlet 1224.

The connection between an end of the first liquid inlet flow channel 1227 and the first sub-inlet 1221, and the connection between an end of the first liquid outlet flow channel 1228 and the first sub-outlet 1222 are both achieved through pipelines. It can be understood that, in this embodiment, through such an arrangement that an end of the first liquid inlet flow channel 1227 is connected to the first sub-inlet 1221, and another end of the first liquid inlet flow channel 1227 is connected to the second inlet 1231; and an end of the first liquid outlet flow channel 1228 is connected to the first sub-outlet 1222, and another end of the first liquid outlet flow channel 1228 is connected to the second outlet 1232, the cooling liquid is transported from the second liquid cooling plate 122 to the third liquid cooling plate 123. The second liquid inlet flow channel 12291 and the second liquid outlet flow channel 12292 are served as transition pipelines to simplify the flow path of the cooling liquid, so as to eliminate the need for bend or excessively long pipelines in the related technologies, which significantly reduces the space occupied by the pipelines, and increases the space utilization inside the battery pack 1.

Furthermore, a flow rate of the cooling liquid is uniformly distributed between the second liquid cooling plate 122 and the third liquid cooling plate 123, which is critical for effective cooling of a multi-layered structure, avoiding overcooling or overheating of some cooling plates and ensuring an overall cooling effect of the liquid cooling module 12.

It should be noted that the first direction refers to a direction Z in FIG. 1, that is, a height direction of the battery module 11 in FIG. 1; a second direction refers to a direction X in FIG. 1, that is, a length direction of the battery module 11 in FIG. 1; and a third direction refers to a direction Y in FIG. 1, that is, a width direction of the battery module 11 in FIG. 1.

Please continue to refer to FIG. 1 to FIG. 5. In an embodiment, the second cooling portion 1229 includes a second liquid inlet flow channel 12291, a second liquid outlet flow channel 12292, and multiple first liquid cooling flow channels 12293 arranged in parallel. An end of the second liquid inlet flow channel 12291 is connected to the second sub-inlet 1223, another end of the second liquid inlet flow channel 12291 is in communication with an end of the multiple first liquid cooling flow channels 12293, another end of the multiple first liquid cooling flow channels 12293 is in communication with an end of the second liquid outlet flow channel 12292, and another end of the first liquid outlet flow channel 1228 is connected to the second sub-outlet 1224.

It can be understood that in this embodiment, through arrangement of the second liquid inlet flow channel 12291, the second liquid outlet flow channel 12292, and the multiple first liquid cooling flow channels 12293 arranged in parallel in the second liquid cooling plate 122, the flow path of the cooling liquid in the second liquid cooling plate 122 is optimized. The second liquid inlet flow channel 12291 and the second liquid outlet flow channel 12292 effectively controls the flow rate of the cooling liquid, so that the flow rate is uniformly distributed in each of the first liquid cooling flow channels 12293, which alleviates the problems of excessive high fluid resistance or unstable flow rate that may occur in a single channel, thereby achieving effective fluid management.

Specifically, once the cooling liquid enters the second liquid inlet flow channel 12291 through the second sub-inlet 1223, the second liquid inlet flow channel 12291 guides the cooling liquid to be uniformly distributed to each of the first liquid cooling flow channels 12293 arranged in parallel, thereby avoiding excessively high or low flow rate in a certain first liquid cooling flow channel 12293, reducing the resistance difference of the cooling liquid in different paths, and ensuring the balance between an outlet flow speed and a flow rate of each flow channel. Moreover, through the second liquid outlet flow channel 12292, the cooling liquid in each of the first liquid inlet flow channels 1227 is uniformly collected together and discharged from the second sub-outlet 1224, thereby realizing uniform flow of the cooling liquid in each liquid cooling plate, improving the overall heat dissipation effect and the fluid balance of the system.

Please continue to refer to FIG. 1 to FIG. 5. In an embodiment, the first cooling portion 1230 includes a third liquid inlet flow channel 1233, a third liquid outlet flow channel 1234, and multiple second liquid cooling flow channels 1235 arranged in parallel. An end of the third liquid inlet flow channel 1233 is connected to the second inlet 1231, another end of the third liquid inlet flow channel 1233 is in communication with an end of the multiple second liquid cooling flow channels 1235, another end of the multiple second liquid cooling flow channels 1235 is in communication with an end of the third liquid outlet flow channel 1234, and another end of the third liquid outlet flow channel 1234 is connected to the second outlet 1232.

It can be understood that in this embodiment, through such an arrangement that the first cooling portion 1230 includes the second liquid inlet flow channel 12291, the second liquid outlet flow channel 12292, and the multiple second liquid cooling flow channels 1235 arranged in parallel, the flow path of the cooling liquid in the third liquid cooling plate 123 is optimized. The second liquid inlet flow channel 12291 and the second liquid outlet flow channel 12292 effectively controls the flow rate of the cooling liquid, so that the flow rate is uniformly distributed in each of the second liquid cooling flow channels 1235, which alleviates the problems of excessive high fluid resistance or unstable flow rate that may occur in a single channel, thereby achieving effective fluid management.

Please continue to refer to FIG. 1 to FIG. 5. The first liquid inlet flow channel 1227 is not in communication with the second liquid inlet flow channel 12291, and/or the first liquid outlet flow channel 1228 is not in communication with the second liquid outlet flow channel 12292.

It should be noted that in the embodiments, the connection method among the first liquid inlet flow channel 1227, the second liquid inlet flow channel 12291, the first liquid outlet flow channel 1228, and the second liquid outlet flow channel 12292 are not specifically limited thereto. However, in order to illustrate the innovation of the present application, in this embodiment, the case where the first liquid inlet flow channel 1227 is not in communication with the second liquid inlet flow channel 12291, and the first liquid outlet flow channel 1228 is not in communication with the second liquid outlet flow channel 12292 is taken as an example to illustrate the technical solution of the present application.

It can be understood that, in this embodiment, a separate loop is formed by the first liquid inlet flow channel 1227, the third liquid inlet flow channel 1233, the second liquid cooling flow channels 1235, the third liquid outlet flow channel 1234, and the first liquid outlet flow channel 1228, and another separate loop is formed by the second liquid inlet flow channel 12291, the first liquid cooling flow channel 12293, and the first liquid outlet flow channel 1228, thereby avoiding intersection and interference between different liquid flows and ensuring that the cooling liquid flow in each loop is independently controlled.

Specifically, an end of the first liquid inlet flow channel 1227 is connected to the first sub-inlet 1221, and an end of the second liquid inlet flow channel 12291 is connected to the second sub-inlet 1223, thereby ensuring that the cooling liquid flows in different flow channels individually, avoiding the mixing of the cooling liquid in flow channels, and making the operation of the liquid cooling module stable. Moreover, the first liquid inlet flow channel 1227 is not in communication with the second liquid inlet flow channel 12291, and the first liquid outlet flow channel 1228 is not in communication with the second liquid outlet flow channel 12292, which avoids excessive high fluid resistance or pressure drop in the second liquid cooling plate 122, and ensures that the flow speed and pressure of the cooling liquid in each flow channel of the second liquid cooling plate 122 remain uniform.

Please continue to refer to FIG. 1 to FIG. 5. In an embodiment, the first liquid inlet flow channel 1227, the first liquid outlet flow channel 1228, the third liquid inlet flow channel 1233, and the third liquid outlet flow channel 1234 are all of linear flow channel structures.

It can be understood that the linear flow channel structures reduce the friction and resistance of the cooling liquid in the flow channels, so as to ensure that the cooling liquid passes through each flow channel smoothly, and allow the cooling liquid flow quickly with low energy consumption, thereby improving the flow efficiency of the overall system. In addition, the design of the linear flow channel simplifies a manufacturing process and reduces the processing difficulty and cost caused by a complex flow channel design.

Please continue to refer to FIG. 1 to FIG. 5. In an embodiment, the first liquid cooling plate 121 includes a first inlet 1211 and a first outlet 1212 that are in communication with each other. The liquid cooling module 12 includes multiple fourth liquid cooling plates 124, first joint pipeline assembly 125, and second joint pipeline assembly 126. The fourth liquid cooling plates 124 are arranged on a side of the first liquid cooling plate 121 away from the first liquid cooling plate 121. The multiple fourth liquid cooling plates 124 are arranged at intervals along the first direction Z, and each of the fourth liquid cooling plates 124 includes a third inlet 1241 and a third outlet 1242. The first liquid cooling plate 121 is arranged at an interval with the fourth liquid cooling plates 124, and an area of the first liquid cooling plate 121 is smaller than an area of the fourth liquid cooling plates 124.

The first joint pipeline assembly 125 is arranged at an end of the multiple fourth liquid cooling plates 124. The second joint pipeline assembly 126 is arranged at another end of the multiple fourth liquid cooling plates 124. The first inlet 1211, the first sub-inlet 1221, the second sub-inlet 1223, and the third inlet 1241 are connected together through the first joint pipeline assembly 125; and the first outlet 1212, the first sub-outlet 1222, the second sub-outlet 1224, and the third outlet 1242 are connected together through the second joint pipeline assembly 126. The first joint pipeline assembly 125 and the second joint pipeline assembly 126 are arranged at an interval along the second direction X, and the second direction X is arranged at a right angle relative to the first direction Z.

The battery module 11 includes multiple battery cells 110. The battery cells 110 are square battery cells 110. The multiple battery cells 110 are arranged in sequence along the third direction Y. The third direction Y is arranged at a right angle relative to the first direction Z.

Along the second direction X, end plates 15 are provided at two ends of the battery module 11, multiple vents 151 are formed in the end plates 15, and the vents 151 penetrate through the end plates 15 along the third direction Y. It can be understood that the vents 151 are designed to allow air or cooling gas to flow freely along the third direction Y, thereby effectively dissipating heat from the battery module 11, so as to keep an operating temperature of the battery module 11 within a safe range during high power output or long-term operation, thereby avoiding performance degradation or thermal runaway due to overheating.

Specifically, the battery pack 1 includes multiple first battery modules 111 and a second battery module 112. The multiple first battery modules 111 are arranged at intervals along the first direction Z. Each of the first battery modules 111 is arranged between two adjacent fourth liquid cooling plates 124. The second battery modules 112 are arranged above the first battery modules 111. The second battery modules 112 are arranged between the fourth liquid cooling plates 124 and the first liquid cooling plate 121. Two adjacent fourth liquid cooling plates 124 are respectively located at a top and a bottom of the first battery modules 111 to achieve double-sided cooling of the first battery modules 111. One of the fourth liquid cooling plates 124 and the first liquid cooling plate 121 are respectively located at a top and a bottom of the second battery module 112 to achieve double-sided cooling of the second battery module 112. As such, the cooling liquid effectively covers the entire surface of the first battery modules 111 and the second battery modules 112, thereby improving the uniformity and efficiency of heat dissipation, preventing local overheating of the battery pack 1, and improving the overall thermal management capability.

It should be noted that the first joint pipeline assembly 125 is arranged at an end of the multiple fourth liquid cooling plates 124, which means that the first joint pipeline assembly 125 is arranged at an end of the fourth liquid cooling plates 124 close to the third inlet 1241. The second joint pipeline assembly 126 is arranged at another end of the multiple fourth liquid cooling plates 124, which means that the second joint pipeline assembly 126 is arranged at an end of the fourth liquid cooling plates 124 close to the third outlet 1242.

It can be understood that in this embodiment, the multiple fourth liquid cooling plates 124 are arranged at intervals along the first direction Z, the first liquid cooling plate 121 is arranged above the fourth liquid cooling plates 124, and the first liquid cooling plate 121 is arranged at an interval with the fourth liquid cooling plates 124, so that a layered cooling is achieved, that is, the heat from the battery modules 11 located at different heights in the battery pack 1 is effectively dissipated simultaneously. Moreover, the first inlet 1211, the first sub-inlet 1221, the second sub-inlet 1223, and the third inlet 1241 are connected together through the first joint pipeline assembly 125, and the first outlet 1212, the first sub-outlet 1222, the second sub-outlet 1224, and the third outlet 1242 are connected together through the second joint pipeline assembly 126, so that the multiple fourth liquid cooling plates 124, one first liquid cooling plate 121, one second liquid cooling plate 122 and one third liquid cooling plate 123 are connected in parallel, thereby improving the flow uniformity of the cooling liquid and temperature control capability.

In addition, in this embodiment, the area of the first liquid cooling plate 121 is configured to be smaller than the area of the fourth liquid cooling plates 124, so that an space inside the battery pack 1 is effectively saved, which is applicable for arrangement in the multi-layered battery pack 1, especially in a case that a height is limited in the first direction Z. The fourth liquid cooling plates 124 with a large area are configured to cool a main area of the battery pack 1, and the first liquid cooling plate 121 with a small area are configured to cool an upper area of the battery pack 1. This arrangement provides a flexible temperature control solution, which helps to achieve uniform temperature distribution and reduce the risk of local overheating.

In addition, the multiple fourth liquid cooling plates 124, the first liquid cooling plates 121, and the second liquid cooling plates 122 are arranged at intervals along the first direction Z, so that a close stacking of the cooling plates is avoided, making the pipeline arrangement flexible, effectively utilizing the available space in the battery pack 1, eliminating complex pipeline connections and reducing layout difficulty.

Furthermore, the first inlet 1211, the first sub-inlet 1221, the second sub-inlet 1223, and the third inlet 1241 are connected together through the first joint pipeline assembly 125, and the first outlet 1212, the first sub-outlet 1222, the second sub-outlet 1224, and the third outlet 1242 are connected together through the second joint pipeline assembly 126, so that a layered cooling structure arranged in parallel is formed through the multiple fourth liquid cooling plates 124, the first liquid cooling plate 121, and the second liquid cooling, and thus the liquid cooling module 12 is applicable for a complex stacking structure of the multi-layered battery module 11. In addition, a parallel design not only improves the cooling efficiency of the liquid cooling module 12, but also reduces the impact caused by the performance difference of the single layer of liquid cooling plate, ensuring that the cooling liquid flows smoothly through multiple layers of liquid cooling plates, thereby ensuring that the temperature of the entire battery pack 1 is the same.

Please continue to refer to FIG. 1 to FIG. 5; in an embodiment, the multiple fourth liquid cooling plates 124, the first liquid cooling plate 121, and the second liquid cooling plate 122 are arranged at intervals along the first direction Z. An area of the second liquid cooling plate 122 is equal to the area of the first liquid cooling plate 121. The battery pack 1 includes a third battery module 113, and the third battery module 113 is arranged between the first liquid cooling plate 121 and the second liquid cooling plate 122.

It can be understood that, in this embodiment, the first liquid cooling plate 121 and the second liquid cooling plate 122 are respectively arranged at a top and a bottom of the third battery module 113, so as to achieve double-sided cooling of the third battery module 113, so that the cooling liquid effectively covers the entire surface of the third battery module 113, thereby improving the uniformity and efficiency of heat dissipation, preventing local overheating of the battery pack 1, and improving the overall thermal management capability.

Specifically, the battery pack 1 includes a third battery module 113, and the third battery module 113 is arranged between the first liquid cooling plate 121 and the second liquid cooling plate 122. The first liquid cooling plate 121 and the second liquid cooling plate 122 are respectively arranged at the top and the bottom of the third battery module 113, so as to achieve double-sided cooling of the third battery module 113, so that the cooling liquid effectively covers the entire surface of the third battery module 113, thereby improving the uniformity and efficiency of heat dissipation, preventing local overheating of the battery pack 1, and improving the overall thermal management capability.

In addition, the multiple first liquid cooling flow channels 12293 arranged in parallel allow the cooling liquid pass through the liquid cooling plates quickly, thereby increasing a cooling surface area of the second liquid cooling plate 122 in contact with the third battery module 113, thereby effectively improving the cooling efficiency. In addition, since the multiple first liquid cooling flow channels 12293 are arranged in parallel, the cooling liquid is uniformly distributed in each of the first liquid cooling flow channels 12293, thereby avoiding local overheating or uneven cooling of the third battery module 113.

Please continue to refer to FIG. 1 to FIG. 5; in an embodiment, the third liquid cooling plate 123 is arranged above the first liquid cooling plate 121, and the third liquid cooling plate 123 is arranged at an interval with the fourth liquid cooling plates 124. An area of the third liquid cooling plate 123 is equal to the area of the first liquid cooling plate 121. The battery pack 1 includes a fourth battery module 114, and the fourth battery module 114 is arranged between the fourth liquid cooling plates 124 and the third liquid cooling plate 123. The third liquid cooling plate 123 and the fourth liquid cooling plates 124 are respectively arranged at a top and a bottom of the fourth battery module 114 to achieve double-sided cooling of the fourth battery module 114, so that the cooling liquid effectively covers the entire surface of the fourth battery module 114, thereby improving the uniformity and efficiency of heat dissipation, preventing local overheating of the battery pack 1, and improving the overall thermal management capability.

In addition, the multiple second liquid cooling flow channels 1235 arranged in parallel allow the cooling liquid pass through the liquid cooling plate quickly, thereby increasing a cooling surface area of the third liquid cooling plate 123 in contact with the fourth battery module 114, thereby effectively improving the cooling efficiency. In addition, since the multiple second liquid cooling flow channels 1235 are arranged in parallel, the cooling liquid is uniformly distributed in each of the first liquid cooling flow channels 12293, thereby avoiding local overheating or uneven cooling of the fourth battery module 114.

Please continue to refer to FIG. 1 to FIG. 5. In an embodiment, the third inlet 1241 and the third outlet 1242 are located at a same end of the fourth liquid cooling plates 124. The first inlet 1211 and the first outlet 1212 are located at a same end of the first liquid cooling plate 121. The first sub-inlet 1221, the first sub-outlet 1222, the second sub-inlet 1223, and the second sub-outlet 1224 are located at a same end of the second liquid cooling plate 122. The second inlet 1231 and the second outlet 1232 are located at a same end of the third liquid cooling plate 123. And the second inlet 1231 and the second outlet 1232 are located at an end of the third liquid cooling plate 123 close to the first liquid cooling plate 121.

Specifically, the third inlet 1241, the third outlet 1242, the first inlet 1211, the first outlet 1212, the first sub-inlet 1221, the first sub-outlet 1222, the second sub-inlet 1223, the second sub-outlet 1224, the first joint pipeline assembly 125, and the second joint pipeline assembly 126 are all arranged at a same end of the liquid cooling module 12.

It can be understood that cooling plates in the multi-layered battery pack 1 require different routings of the pipelines due to differences in height and interval. In a case that inlets and outlets and pipeline assemblies are distributed at different ends, it would lead to complex intersection and routing problems of the pipelines. In this embodiment, all the inlets and outlets and pipeline assemblies are arranged at the same end of the liquid cooling module 12, so that the pipelines do not need to extend or be arranged from multiple directions during mounting. An arrangement of the pipelines is simply adjusted based on a position of each layer of cooling plates to adapt to different numbers of layers and cooling requirements, improving a compatibility of the liquid cooling module 12 and reducing the space occupied by the pipelines in the liquid cooling module 12, thereby achieving flexible layout of the pipelines in the structure of the multi-layered battery pack 1, solving the pipeline layout problem in a case that the space in the battery pack 1 is limited, and meeting the heat dissipation needs of a large-capacity battery pack 1.

Please refer to FIG. 1, FIG. 2, FIG. 3, FIG. 4, FIG. 5 and FIG. 6. FIG. 6 is a schematic diagram of one structure of a first joint provided in an embodiment of the present application.

In an embodiment, the first joint pipeline assembly 125 includes multiple first joints 1251 in communication with each other, one of the first joints 1251 is in communication with the third inlet 1241 of one of the fourth liquid cooling plates 124, and one of the multiple first joints 1251 close to the first liquid cooling plate 121 is in communication with the first inlet 1211. The second joint pipeline assembly 126 includes multiple second joints 1261 in communication with each other, one of the second joints 1261 is in communication with the third outlet 1242 of one of the fourth liquid cooling plates 124, and one of the multiple second joints 1261 close to the first liquid cooling plate 121 is in communication with the first outlet 1212.

It should be noted that adjacent first joints 1251, the first joints 1251 and the third inlet 1241, the first joints 1251 and the first inlet 1211, adjacent second joints 1261, the second joints 1261 and the third outlet 1242, as well as the second joints 1261 and the first outlet 1212 are all connected together through pipelines.

Specifically, the first joints 1251 are three-way joints, and each of the first joints 1251 includes a first opening 12511, a second opening 12512, and a third opening 12513 in communication with each other. The first opening 12511 of one of the first joints 1251 is in communication with the third inlet 1241 of one of the fourth liquid cooling plates 124. Along the first direction Z, in two adjacent first joints 1251, the second opening 12512 of one of the first joints 1251 is in communication with the second opening 12512 or the third opening 12513 of another one of the first joints 1251, thereby realizing a communication between the multiple first joints 1251.

It can be understood that the three-way joints in the related technologies are usually assembled from multiple components, and a sealing performance at a connecting is susceptible to mounting accuracy and use environment, which causes leakage of the cooling liquid. In this embodiment, the first joints 1251 are configured to be three-way joints. Each of the first joints 1251 includes a first opening 12511, a second opening 12512, and a third opening 12513 in communication with each other. Through reduction of a volume of a connecting part and optimization of the design of the flow channels, an extension length and layout of the pipeline in the second direction X in the related technologies are reduced, thereby saving the space inside the battery pack 1.

It should be noted that, in this embodiment, the second direction X is the direction X in FIG. 1, or the second direction X is a length direction of the battery module 11. In addition, a structure of the second joints 1261 is same as a structure of the first joints 1251, that is, the second joints 1261 are also three-way joints. Please refer to the above description of the first joints 1251 for details, which are not repeated in this embodiment.

It can be understood that, in this embodiment, one of the first joints 1251 is in communication with the third inlet 1241 of one of the fourth liquid cooling plates 124, and one of the multiple first joints 1251 close to the first liquid cooling plate 121 is in communication with the first inlet 1211; and one of the second joints 1261 is in communication with the third outlet 1242 of one of the fourth liquid cooling plates 124, and one of the multiple second joints 1261 close to the first liquid cooling plate 121 is in communication with the first outlet 1212, so that multiple fourth liquid cooling plates 124 and one first liquid cooling plate 121 are arranged in parallel, and a flow rate of the cooling liquid in each liquid cooling plate is uniform, thereby ensuring that the cooling effect of the liquid cooling module 12 is uniform, avoiding excessive high local temperature differences, and thereby effectively improving the heat dissipation efficiency and temperature control performance of the liquid cooling module 12.

Furthermore, since the cooling liquid is uniformly distributed to multiple liquid cooling plates through the first joint pipeline assembly 125, an overall pressure drop of the liquid cooling module 12 is reduced. Therefore, there is no need to maintain the flow rate by reducing a diameter or bending of the pipelines. This embodiment allows the use of large and straight pipelines to increase the flow rate and reduce the flow resistance. In addition, in a case that the flow rate of a certain liquid cooling plate is excessively large, throttling control would be performed by adjusting diameters of inlet and outlet pipelines of the first joints 1251, thereby further optimizing the flow uniformity.

Please refer to FIG. 1, FIG. 2, FIG. 3, FIG. 4, FIG. 5, FIG. 6 and FIG. 7. FIG. 7 is a schematic diagram of another structure of the first joint provided in an embodiment of the present application.

In an embodiment, the first joint pipeline assembly 125 further includes a liquid inlet joint 12510 connected to one of the multiple first joints 1251, and the liquid inlet joint 12510 is configured as an inlet end for a cooling medium. The second joint pipeline assembly 126 further includes a liquid outlet joint 12610 connected to one of the multiple second joints 1261, and the liquid outlet joint 12610 is configured as an outlet end for the cooling medium.

Since the liquid inlet joint 12510 is connected to one of the multiple first joints 1251, a flow direction of the cooling liquid is adjusted according to actual needs, thereby improving the flexibility and adaptability of the liquid cooling module 12. Moreover, by adjusting position and size of the individual liquid inlet joint 12510, the cooling liquid flows through each cooling plate via an optimal path to adapt to structural requirements of different battery packs 1 and ensure a more uniform flow distribution throughout the liquid cooling module 12.

Furthermore, the liquid inlet joints 12510 and the first joints 1251 are integrally formed. Specifically, the liquid inlet joints 12510 and the first joints 1251 are integrally formed by an injection molding process, thereby improving the overall sealing and connection reliability, and further improving the efficiency of the cooling liquid flow, and simplifying assembly process.

It should be noted that, in this embodiment, a structure of the liquid outlet joint 12610 is same as a structure of the liquid inlet joint 12510, that is, the liquid outlet joint 12610 is connected to one of the multiple second joints 1261, and the liquid outlet joints 12610 and the second joints 1261 are integrally formed through an injection molding process. Please refer to the above description of the liquid inlet joint 12510 for details, which are not repeated in this embodiment.

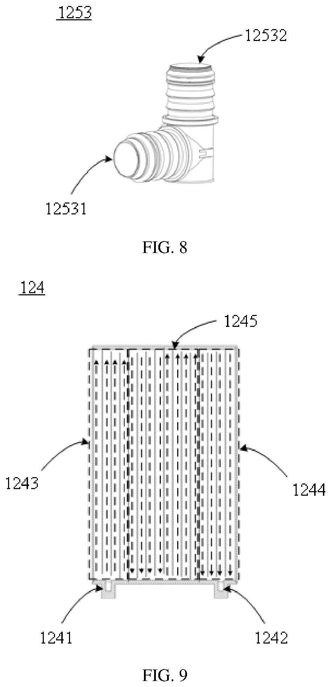

Please refer to FIG. 1, FIG. 2, FIG. 3, FIG. 4, FIG. 5, FIG. 6, FIG. 7 and FIG. 8. FIG. 8 is a schematic diagram of a structure of a first connecting joint provided in an embodiment of the present application.

In an embodiment, the first joint pipeline assembly 125 further includes a first connecting joint 1253. The first connecting joint 1253 is arranged on a side of the first joint pipeline assembly 125 away from the first liquid cooling plate 121. An end of the first connecting joint 1253 is in communication with the third inlet 1241 of one of the fourth liquid cooling plates 124, and another end of the first connecting joint 1253 is connected to one of the first joints 1251. The second joint pipeline assembly 126 further includes a second connecting joint 1263. The second connecting joint 1263 is arranged on a side of the second joint pipeline assembly 126 away from the first liquid cooling plate 121. An end of the second connecting joint 1263 is in communication with the third outlet 1242 of one of the fourth liquid cooling plates 124, and another end of the second connecting joint 1263 is connected to one of the second joints 1261.

Specifically, the multiple fourth liquid cooling plates 124 are arranged at intervals along the first direction Z, and the first liquid cooling plate 121 is arranged above the fourth liquid cooling plates 124. In the multiple fourth liquid cooling plates 124, the fourth liquid cooling plate 124 away from the first liquid cooling plate 121 is in contact with a bottom plate 141141 of a box body (not shown in the drawings) of the battery pack 1, and the first connecting joint 1253 and the second connecting joint 1263 are both arranged corresponding to one of the fourth liquid cooling plates 124 away from the first liquid cooling plate 121, that is, the first connecting joint 1253 and the second connecting joint 1263 are connected to a same one of the fourth liquid cooling plates 124.

Further, the first connecting joint 1253 is a two-way joint. The first connecting joint 1253 includes a fourth opening 12531 and a fifth opening 12532 in communication with each other. The fourth opening 12531 of the first connecting joint 1253 is in communication with the third inlet 1241 of one of the fourth liquid cooling plates 124. The fifth opening 12532 of the first connecting joint 1253 is in communication with the second opening 12512 or the third opening 12513 of the first joint 1251.

It should be noted that, in this embodiment, a structure of the second connecting joint 1263 is same as a structure of the first connecting joint 1253, that is, the second connecting joint 1263 is a two-way joint. Please refer to the above description of the first connecting joint 1253 for details, which are not repeated in this embodiment.

It can be understood that, in this embodiment, an end of the first connecting joint 1253 is in communication with the third inlet 1241 of one of the fourth liquid cooling plates 124, another end of the first connecting joint 1253 is connected to one of the first joints 1251, an end of the second connecting joint 1263 is in communication with the third outlet 1242 of one of the fourth liquid cooling plates 124, and another end of the second connecting joint 1263 is connected to one of the second joints 1261, so that a linear pipeline layout is applicable for the connection between adjacent fourth liquid cooling plates 124, reducing bending of pipelines, and improving the flow efficiency of the cooling liquid and the flow control of the cooling liquid.

Please continue to refer to FIG. 1 to FIG. 8. In an embodiment, the first joint pipeline assembly 125 includes a third joint 1252, and the third joint 1252 is arranged between the first liquid cooling plate 121 and the second liquid cooling plate 122. The third joint 1252 is connected to the first sub-inlet 1221, the second sub-inlet 1223, the first inlet 1211, and the first joints 1251, respectively. The second joint pipeline assembly 126 includes a fourth joint 1262, and the fourth joint 1262 is arranged between the first liquid cooling plate 121 and the second liquid cooling plate 122. The fourth joint 1262 is connected to the first sub-outlet 1222, the second sub-outlet 1224, the first outlet 1212, and the second joints 1261, respectively.

Specifically, the third joint 1252 is a three-way joint, and the third joint 1252 is connected to the first sub-inlet 1221, the second sub-inlet 1223, the first inlet 1211, and one of the first joints 1251 through multiple pipelines, respectively. A pipeline connecting the third joint 1252 and the first sub-inlet 1221 is a first branch pipeline. The first branch pipeline is connected to the third joint 1252, the first sub-inlet 1221, and the first inlet 1211, respectively, so that the liquid cooling liquid flows into the first liquid cooling plate 121 and the second liquid cooling plate 122 through the one of the first joints 1251 and the third joint 1252.

The fourth joint 1262 is a three-way joint, and the fourth joint 1262 is connected to the first sub-outlet 1222, the second sub-outlet 1224, the first outlet 1212, and one of the second joints 1261 through multiple pipelines. A pipeline connecting the fourth joint 1262 with the first sub-outlet 1222 is configured as a second branch pipeline. The second branch pipeline is connected to the fourth joint 1262, the first sub-outlet 1222, and the first outlet 1212, respectively, so that the cooling liquid flows out of the first liquid cooling plate 121 and the second liquid cooling plate 122 through the fourth joint 1262 and the second joints 1261.

It can be understood that in this embodiment, the third joint 1252 and the fourth joint 1262 are arranged to reasonably distribute the cooling liquid between the first liquid cooling plate 121 and the second liquid cooling plate 122, thereby simplifying the connection of the multiple layers of cooling plates, effectively solving the problem of how to efficiently connect the cooling plates in the multi-layered structure, eliminating the use of additional pipelines, and reducing the complexity of the liquid cooling module 12.

Furthermore, the first joint pipeline assembly 125 further includes a first pipeline 1254 arranged between the first liquid cooling plate 121 and the third liquid cooling plate 123, and the second joint pipeline assembly 126 further includes a second pipeline 1264 arranged between the first liquid cooling plate 121 and the third liquid cooling plate 123. The first pipeline 1254 is arranged at an interval with the second pipeline 1264.

A first through hole 1225 is formed in a side of the first liquid inlet flow channel 1227 away from the first sub-inlet 1221, and a second through hole 1226 is formed in a side of the first liquid outlet flow channel 1228 away from the first sub-outlet 1222. An end of the first pipeline 1254 is connected to the first through hole 1225, another end of the first pipeline 1254 extends from the first liquid inlet flow channel 1227 in a direction close to the second inlet 1231, and the another end of the first pipeline 1254 is connected to the second inlet 1231. An end of the second pipeline 1264 is connected to the second through hole 1226, another end of the second pipeline 1264 extends from the first liquid outlet flow channel 1228 in a direction close to the second outlet 1232, and the another end of the second pipeline 1264 is connected to the second outlet 1232.

Specifically, the first pipeline 1254 includes a first straight segment 12541, a second straight segment 12542, a third straight segment 12543, a first bending segment 12544, and a second bending segment 12545. An end of the first straight segment 12541 is in communication with the first liquid inlet flow channel 1227, and another end of the first straight segment 12541 extends from the second liquid cooling plate 122 in a direction close to the first liquid cooling plate 121 and is connected to an end of the first bending segment 12544. Another end of the first bending segment 12544 is connected to the second straight line segment 12542, another end of the second straight line segment 12542 extends from the first liquid cooling plate 121 in a direction close to the third liquid cooling plate 123 and is connected to an end of the second bending segment 12545. Another end of the second bending segment 12545 is connected to an end of the third straight line segment 12543, and another end of the third straight line segment 12543 extends from the second bending segment 12545 in a direction close to the third liquid cooling plate 123 and is connected to the second inlet 1231.

It should be noted that a structure of the second pipeline 1264 is same as a structure of the first pipeline 1254. The structure of the first pipeline 1254 has been described in detail in this embodiment, so the structure of the second pipeline is not repeated here.

It can be understood that in this embodiment, an arrangement of the first pipeline 1254 and the second pipeline 1264 simplifies the design and manufacturing process, which is conducive to standardized production and reduces manufacturing costs and maintenance difficulties. In addition, a unified pipeline structure ensures that flow characteristics of the cooling liquid in each portion are the same, further improving the stability and cooling effect of the cooling system.

Please continue to refer to FIG. 1 to FIG. 8. In an embodiment, the second battery module 112 and the third battery module 113 are arranged in a stacked manner. The fourth battery module 114 is arranged in a same layer as and at an interval with the third battery module 113. A groove 13 is formed between the third battery module 113 and the fourth battery module 114. The first pipeline 1254 and the second pipeline 1264 are arranged between the fourth battery module 114 and the third battery module 113, and the first pipeline 1254 and the second pipeline 1264 extend along a side of the groove 13, so that the arrangement of the first pipeline 1254 and the second pipeline 1264 utilizes the unused gap space in the battery pack 1, improving the compactness of the overall layout, and avoiding interference between the pipelines and other elements of the battery pack 1.

In addition, through the arrangement of pipelines between adjacent battery modules 11, the cooling liquid is transferred from the third liquid cooling plate 123 to the fourth liquid cooling plates 124, thereby avoiding the intersection problem of pipelines and maintaining the simplicity and maintainability of the liquid cooling module 12.

Please continue to combine FIG. 1 to FIG. 8. In an embodiment, the cooling module further includes multiple quick-connect plugs 127, one of the quick-connect plugs 127 is arranged corresponding to one first inlet 1211, one of the quick-connect plugs 127 is arranged corresponding to one first outlet 1212, one of the quick-connect plugs 127 is arranged corresponding to one second inlet 1231, one of the quick-connect plugs 127 is arranged corresponding to one second outlet 1232, one of the quick-connect plugs 127 is arranged corresponding to one first sub-inlet 1221, one of the quick-connect plugs 127 is arranged corresponding to one first sub-outlet 1222, one of the quick-connect plugs 127 is arranged corresponding to one second sub-inlet 1223, one of the quick-connect plugs 127 is arranged corresponding to one second sub-outlet 1224, one of the quick-connect plugs 127 is arranged corresponding to one third inlet 1241, and one of the quick-connect plugs 127 is arranged corresponding to one third outlet 1242.

Specifically, one of the first joints 1251 is in communication with the third inlet 1241 through one of the quick-connect plugs 127, and one of the second joints 1261 is in communication with the third outlet 1242 through one of the quick-connect plugs 127. The third joint 1252 is in communication with the first sub-inlet 1221 through one of the quick-connect plugs 127, the third joint 1252 is in communication with the first sub-outlet 1222 through one of the quick-connect plugs 127, and the third joint 1252 is in communication with the first inlet 1211 through one of the quick-connect plugs 127. The fourth joint 1262 is in communication with the first sub-outlet 1222 through one of the quick-connect plugs 127, the fourth joint 1262 is in communication with the second sub-outlet 1224 through one of the quick-connect plugs 127, and one fourth joint 1262 is in communication with the first outlet 1212 through one of the quick-connect plugs 127.

It can be understood that in this embodiment, an arrangement of the quick-connect plugs 127 simplifies the connection method of the pipelines, avoids the complicated threaded connection or other fixing methods in related designs, simplifies the mounting process of the liquid cooling module 12, and reduces the space requirements for the connection and turning of the pipelines, making the layout of the overall system compact, especially for the cooling module designed for the multi-layered battery module 1, which can effectively save the layout space in the second direction X, making the design of the battery pack 1 flexible.

Please continue to refer to FIG. 1, FIG. 2 and FIG. 9. FIG. 9 is a schematic diagram of a structure of a first liquid cooling plate provided in an embodiment of the present application.

In one embodiment, the fourth liquid cooling plates 124 are configured as extruded liquid cooling plates. It can be understood that for a battery pack 1 with a multi-layered structure, multiple cooling plates need to be arranged. An extrusion molding process, which is characterized by high efficiency and low cost, is appliable for the extruded liquid cooling plates. Therefore, a quick and mass production of the first liquid cooling plate 121 is achieved, thereby reducing the manufacturing cost of the liquid cooling module 12.

Specifically, a fourth liquid inlet flow channel 1243, a fourth liquid outlet flow channel 1244, and multiple third liquid cooling flow channels 1245 arranged in series are arranged in each of the fourth liquid cooling plates 124. An end of the fourth liquid inlet flow channel 1243 is connected to the third inlet 1241, another end of the fourth liquid inlet flow channel 1243 is in communication with an end of the third liquid cooling flow channels 1245, another end of the third liquid cooling flow channels 1245 is in communication with an end of the fourth liquid outlet flow channel 1244, and another end of the fourth liquid outlet flow channel 1244 is connected to the third outlet 1242, thereby ensuring that the cooling liquid is uniformly distributed in the first liquid cooling plate 121, and improving the cooling effect of the entire liquid cooling module 12. Moreover, the fourth liquid inlet flow channel 1243, the fourth liquid outlet flow channel 1244, and the third liquid cooling flow channels 1245 are directly formed form extruded liquid cooling plates through an extrusion process, thereby further reducing the production cost of the first liquid cooling plate 121.

Specifically, the fourth liquid inlet flow channels 1243 of two adjacent fourth liquid cooling plates 124 are in communication with each other, and the fourth liquid outlet flow channels 1244 of two adjacent fourth liquid cooling plates 124 are in communication with each other, which eliminate the complex structure of the pipelines, makes the mounting process of the multiple fourth liquid cooling plates 124 simple, and reduces the mounting cost and maintenance cost of the multiple fourth liquid cooling plates 124.

Furthermore, the fourth liquid inlet flow channel 1243, the fourth liquid outlet flow channel 1244, and the third liquid cooling flow channels 1245 are all of linear channel structures. It can be understood that the linear flow channel structures reduce the friction and resistance of the cooling liquid in the flow channels, so as to ensure that the cooling liquid passes through each flow channel smoothly, and make the cooling liquid flow quickly with less energy consumption, thereby improving the flow efficiency of the entire system. In addition, the design of the linear flow channels simplifies the manufacturing process and reduces the processing difficulty and cost caused by a complex design of the flow channels.

## Claims

1. A liquid cooling module, comprising:
a second liquid cooling plate, a flow channel being arranged in the second liquid cooling plate; and
a third liquid cooling plate arranged at an interval with the second liquid cooling plate, a first cooling portion being arranged in the third liquid cooling plate, and the first cooling portion being in communication with the flow channel to guide cooling liquid into the first cooling portion and/or to guide the cooling liquid out of the first cooling portion.

2. The liquid cooling module of claim 1, wherein the flow channel comprises a first liquid inlet flow channel and a first liquid outlet flow channel; a second cooling portion located between the first liquid inlet flow channel and the first liquid outlet flow channel is further arranged in the second liquid cooling plate; and the second liquid cooling plate comprises a first sub-inlet, a first sub-outlet, a second sub-inlet, and a second sub-outlet;
wherein an end of the second cooling portion is connected to the second sub-inlet, another end of the second cooling portion is connected to the second sub-outlet; an end of the first liquid inlet flow channel is connected to the first sub-inlet, another end of the first liquid inlet flow channel is connected to an end of the first cooling portion; an end of the first liquid outlet flow channel is connected to the first sub-outlet, and another end of the first liquid outlet flow channel is connected to another end of the first cooling portion.

3. The liquid cooling module of claim 2, wherein the second cooling portion comprises a second liquid inlet flow channel, a second liquid outlet flow channel, and a plurality of first liquid cooling flow channels arranged in parallel;
an end of the second liquid inlet flow channel is connected to the second sub-inlet, another end of the second liquid inlet flow channel is in communication with an end of the plurality of first liquid cooling flow channels, another end of the plurality of first liquid cooling flow channels is in communication with an end of the second liquid outlet flow channel, and another end of the first liquid outlet flow channel is connected to the second sub-outlet.

4. The liquid cooling module of claim 3, wherein the first liquid inlet flow channel is not in communication with the second liquid inlet flow channel, and/or the first liquid outlet flow channel is not in communication with the second liquid outlet flow channel.

5. The liquid cooling module of any one of claims 2 to 4, wherein the third liquid cooling plate comprises a second inlet and a second outlet; the first cooling portion comprises a third liquid inlet flow channel, a third liquid outlet flow channel, and a plurality of second liquid cooling flow channels arranged in parallel;
wherein an end of the third liquid inlet flow channel is connected to the second inlet, another end of the third liquid inlet flow channel is in communication with an end of the plurality of second liquid cooling flow channels, another end of the plurality of second liquid cooling flow channels is in communication with an end of the third liquid outlet flow channel, and another end of the third liquid outlet flow channel is connected to the second outlet.

6. The liquid cooling module of claim 5, wherein another end of the first liquid inlet flow channel is connected to the second inlet, and another end of the first liquid outlet flow channel is connected to the second outlet.

7. The liquid cooling module of claim 5, wherein the first liquid inlet flow channel, the first liquid outlet flow channel, the third liquid inlet flow channel, and the third liquid outlet flow channel are all of linear flow channel structures.

8. The liquid cooling module of claim 5, wherein the liquid cooling module further comprises:
a first liquid cooling plate arranged below the second liquid cooling plate, wherein the third liquid cooling plate is arranged in a same layer as and at an interval with the first liquid cooling plate;
a first joint pipeline assembly arranged at an end of the first liquid cooling plate; and
a second joint pipeline assembly arranged at another end of the first liquid cooling plate;
wherein the first liquid cooling plate comprises a first inlet and a first outlet; the first inlet, the first sub-inlet, and the second sub-inlet are connected together through the first joint pipeline assembly; and the first outlet, the first sub-outlet, and the second sub-outlet are connected together through the second joint pipeline assembly.

9. The liquid cooling module of claim 8, wherein the liquid cooling module further comprises:
a plurality of fourth liquid cooling plates arranged on a side of the first liquid cooling plate away from the first liquid cooling plate; the plurality of fourth liquid cooling plates are arranged at intervals along a first direction, and the fourth liquid cooling plates comprise a third inlet and a third outlet;
wherein the first joint pipeline assembly is connected to the third inlet, and the second joint pipeline assembly is connected to the third outlet.

10. The liquid cooling module of claim 9, wherein the first joint pipeline assembly comprises a plurality of first joints in communication with each other, one of the plurality of first joints is in communication with the third inlet of one of the fourth liquid cooling plates, one of the plurality of first joints close to the first liquid cooling plate is in communication with the first inlet;
the second joint pipeline assembly comprises a plurality of second joints in communication with each other, one of the second joints is in communication with the third outlet of one of the fourth liquid cooling plates, and one of the plurality of second joints close to the first liquid cooling plate is in communication with the first outlet.

11. The liquid cooling module of claim 10, wherein the first joint pipeline assembly further comprises a liquid inlet joint connected to one of the plurality of first joints, the liquid inlet joint is configured as an inlet end for a cooling medium, the second joint pipeline assembly further comprises a liquid outlet joint connected to one of the plurality of second joints, and the liquid outlet joint is an outlet end for the cooling medium.

12. The liquid cooling module of claim 11, wherein the liquid inlet joint and the first joints are integrally formed, and the liquid outlet joint and the second joints are integrally formed.

13. The liquid cooling module of claim 10, wherein the first joints are configured as three-way joints, the first joints comprise a first opening, a second opening, and a third opening in communication with each other; the first opening of one of the first joints is in communication with the third inlet of one of the fourth liquid cooling plates; wherein along the first direction, in two adjacent first joints, the second opening of one of the first joints is in communication with the second opening or the third opening of another of the first joints.

14. The liquid cooling module of claim 10, wherein the first joint pipeline assembly comprises a third joint; the third joint is arranged between the first liquid cooling plate and the second liquid cooling plate; the third joint is connected to the first sub-inlet, the second sub-inlet, the first inlet, and the first joints, respectively;
the second joint pipeline assembly comprises a fourth joint; the fourth joint is arranged between the first liquid cooling plate and the second liquid cooling plate; and the fourth joint is connected to the first sub-outlet, the second sub-outlet, the first outlet, and the second joints, respectively.

15. The liquid cooling module of claim 9, wherein a fourth liquid inlet flow channel, a fourth liquid outlet flow channel, and a plurality of third liquid cooling flow channels arranged in series are arranged in the fourth liquid cooling plates; an end of the fourth liquid inlet flow channel is connected to the third inlet, another end of the fourth liquid inlet flow channel is in communication with an end of the third liquid cooling flow channels, another end of the third liquid cooling flow channels is in communication with an end of the fourth liquid outlet flow channel, and another end of the fourth liquid outlet flow channel is connected to the third outlet;
wherein fourth liquid inlet flow channels of two adjacent fourth liquid cooling plates are in communication with each other, and fourth liquid outlet flow channels of two adjacent fourth liquid cooling plates are in communication with each other.

16. The liquid cooling module of claim 15, wherein the fourth liquid inlet flow channel, the fourth liquid outlet flow channel, and the third liquid cooling flow channels are all of linear channel structures.

17. The liquid cooling module of claim 8, wherein the first joint pipeline assembly further comprises a first pipeline arranged between the second liquid cooling plate and the third liquid cooling plate; an end of the first pipeline is in communication with the first liquid inlet flow channel, and another end of the first pipeline extends from the second liquid cooling plate in a direction close to the first liquid cooling plate and is bent to be connected to the second inlet.

18. The liquid cooling module of claim 17, wherein the first pipeline comprises a first straight segment, a second straight segment, a third straight segment, a first bending segment, and a second bending segment;
wherein an end of the first straight segment is in communication with the first liquid inlet flow channel, another end of the first straight segment extends from the second liquid cooling plate in a direction close to the first liquid cooling plate and is connected to an end of the first bending segment, another end of the first bending segment is connected to the second straight line segment, another end of the second straight line segment extends from the first liquid cooling plate in a direction close to the third liquid cooling plate and is connected to an end of the second bending segment, another end of the second bending segment is connected to an end of the third straight line segment, and another end of the third straight line segment extends from the second bending segment in a direction close to the third liquid cooling plate and is connected to the second inlet.

19. A battery pack, comprising a battery module and a liquid cooling module, the liquid cooling module comprising:
a second liquid cooling plate, a flow channel being arranged in the second liquid cooling plate; and
a third liquid cooling plate arranged at an interval with the second liquid cooling plate, a first cooling portion being arranged in the third liquid cooling plate, and the first cooling portion being in communication with the flow channel to guide cooling liquid into the first cooling portion and/or to guide the cooling liquid out of the first cooling portion;
wherein the battery module is arranged between adjacent liquid cooling plates.

20. The battery pack of claim 19, wherein the flow channel comprises a first liquid inlet flow channel and a first liquid outlet flow channel; a second cooling portion located between the first liquid inlet flow channel and the first liquid outlet flow channel is further arranged in the second liquid cooling plate; and the second liquid cooling plate comprises a first sub-inlet, a first sub-outlet, a second sub-inlet, and a second sub-outlet;
wherein an end of the second cooling portion is connected to the second sub-inlet, another end of the second cooling portion is connected to the second sub-outlet; an end of the first liquid inlet flow channel is connected to the first sub-inlet, another end of the first liquid inlet flow channel is connected to an end of the first cooling portion; an end of the first liquid outlet flow channel is connected to the first sub-outlet, and another end of the first liquid outlet flow channel is connected to another end of the first cooling portion.
